# EUROPEAN PATENT APPLICATION

(11) **EP 3 346 439 A1**
(43) Date of publication of application: **11.07.2018**
(21) Application number: 17020009.1
(22) Date of filing: 04.01.2017
(51) Int. Cl.: G06Q 30/06, G07G 1/00, B62B 3/14

(54) **SYSTEM AND METHOD FOR FIXING PURCHASABLE GOODS, CALCULATING AMOUNT OWED AND SETTLING MONETARY OBLIGATIONS IN RETAIL ENVIRONMENTS POSTERIORLY**

(71) Applicant: Virca OÜ, 10116 Tallinn (EE)
(72) Inventor: Virca OÜ, 10116 Tallinn (EE)
(74) Representative: Nelsas, Tõnu

(57) **Abstract**

System and method for fixing purchasable goods, calculation amount owned and settling monetary obligations in retail environments posteriorly by having customers authenticate themselves before entering the shopping area and having their shopping's recorded by using a customized shopping cart fitted with a fixed omnidirectional barcode scanner, digital scale, user interface computer and attached cameras. Our point of sales system will use specifically designed computer vision algorithms to allow for automatisation in posteriorly determining of the contents of customers shopping cart. Additional manual reviewing of video data that has been analysed and filtered by computer vision algorithms will be done to check and verify the contents of customer's shopping carts and if needed make changes to customer's final purchasable goods.

## Description

### BACKGROUND OF THE INVENTION

### Field of the Invention

The invention is in the field of traditional brick and mortar commerce more specifically retail stores and supermarkets. More specifically the invention lies in the field of point-of-sale systems including self-service and other check-out solutions.

### State of the art

When shopping at a supermarket, the items to be purchased are typically placed within a trolley and taken to a point of sale terminal where a cashier scans each item in turn to record the sale. The items must be removed from the trolley and presented to the cashier in turn so that each item can be recorded separately, and so that the total cost of all items purchased can be calculated. Once the sale has been recorded, the items must be re-gathered and packaged by the customer taking additional time.

The above process requires a considerable time at the point of sale that usually causes long queues of shoppers waiting to be serviced. This is a major inefficiency and can be a problem, particularly for shoppers with young children and babies. In addition, it may be necessary to return one or more items if the shopper does not have enough money to pay for the items.

Supermarkets have tried to solve that problem by installing self-service check-out solutions but these solutions carry different weaknesses. Self-service solutions can generally be placed into 2 categories:
1) Self-service kiosks that are located near the check-out area of the store. Customers go to the kiosks with desired products, scan their products at the kiosk and pay for their purchases with an electronic means of payment;
2) Self-service solutions where customers use a remote to scan the products inside the store and go to the kiosk to upload the recorded products into the kiosk, if necessary do an extra security check and pay for their purchases with an electronic means of payment

Main weakness for both solutions 1 and 2 resides in the fact that customers still have to move to the kiosk to either scan and pay (takes more time) or upload, pass security check and pay (more security risk for the store) for the merchandise. This process still creates a bottle-neck in the check-out system and causes customers to wait. Allowing customers to self-scan and walk out with no security check would be too big of a security risk and would kill supermarkets already thin profit margins.

Various automatic methods have been devised to improve this process through application of technologies such as bar code markings and readers, or us of RFID tags. Schkolnick et al. in U.S. Pat. Nos. 6,032,127 and 5,729,697 describe an intelligent shopping cart that can automatically keep track of objects selected and placed in the cart. The objects have radio frequency tags attached. A radio frequency field from an antenna within the cart interrogates the radio frequency tags on objects with the cart. The cart has a computer to cause a periodic interrogation of all tags within the radio frequency field. A data structure within the computer's memory is then updated to include an entry for each object within the cart. The computer may also perform other useful features such as computing the total cost of all items currently in the cart and displaying this running total on a cart display. The computer may also have a credit card reader attached thereto, allowing a customer to pay the running total by swiping a credit card through the reader.

RFID tags are capable of providing considerable identification data in response to an interrogation by a tag reader, the data may be related to the object the tag is attached thereto, having been specified at the time the tag was attached. However, current RFID tag technology by itself does not provide sufficient positional accuracy to identify objects e.g. retail items by their position on a shelf in a store. It must also be noted that RFID technology would greatly increase costs for manufacturers as every chip will cost money and installing new product lines that could provide the products with chips will also need big investments.

A global positioning system GPS receiver can be attached to the RFID tag to provide improved positional accuracy information. However, such GPS receivers are considerably more expensive than the attached RFID tag and although improved, still do not provide the positional accuracy needed for small retail items in a retail store.

Patent for different check-out solutions using shopping carts with omnidirectional barcode scanner and weighing scales (US 8464945 B2) or a patent for locally placed cameras in the store to track objects from shelves to containers/carts (US 7168618 B2) or a patent for identifying products inside the shopping cart via camera footage (WO2016135142) have been proposed. Our solution aims to produce commercially viable check-out solution that would keep the costs low and security sufficient for retail-stores.

### BRIEF SUMMARY OF THE INVENTION

Our solution is designed to provide supermarket customers with an instant check-out solution while keeping costs low and security standards high for the store. Our solution allows the customers to walk out of the shopping area with all items they chose to register and put into the customized shopping cart considered purchased - customers will not need to stand in cues. Our invention will fulfil regular POS functions for the store such as: fixing purchasable goods, calculating amount owned, facilitating payment, issuing receipt and theft prevention.

The novelty of our invention lies in 8 components and steps that together form a new service:
1. Having customers activate (log-in) and use a customized shopping cart in the store;
2. having customers register the products they wish to purchase through scanning the products EAN code with an omnidirectional barcode scanner attached to the customized shopping cart or by choosing the desired product from user interface computer's menu (for weighable products) - it is not permitted to put unregistered products into the customized shopping cart;
3. omnidirectional barcode scanner, digital scale and touch screen interface attached to the customized shopping cart will capture and save all data regarding customers' intended purchases onto a user interface computer;
4. digital cameras attached to the customized shopping cart will record and save video footage onto the user interface computer from comprehensive angles whenever objects or products are put into the shopping cart or a product is registered by the customer;
5. captured video footage and scanning data will be collected after the store is closed and sent to our datacentre where it is stored and organized;
6. collected data will be analysed by specifically designed computer vision algorithms that compare customer's registered products to actual products put into the customized shopping cart to make sure no unregistered products were put into the cart. Specifically designed computer vision algorithms allow to partially automate (up to 85-95%) the process of determining the contents of customers' shopping carts;
7. workers will use manual inspection on video data that has been analysed and filtered by specifically designed computer vision algorithms and corresponding product registration data to check and verify the contents of customers' shopping carts and if needed make changes to customers' final purchasable goods;
8. customers will receive a receipt and invoice to their e-mail inbox.

Custom-designed computer vision algorithms automate most of the theft prevention and customer purchasable goods fixation processes which makes the process more efficient and cheaper than using regular in-store cashiers. Additional manual inspection of filtered video material ensures that all goods are accounted for and no stealing goes unnoticed which makes the solution more efficient and profitable for the stores than using present self-service solutions. Other advantages for the stores comprise better overview of customers' shopping habits, decreased payment facilitation fees by using invoices (cheaper than card payments) and increased revenue due to more convenient shopping for the customers.

Optionally the amount owned for customer's registered goods will be payable in the store via card payment using a smartcard reader and PCI security standard compatible pin pad or magnetic stripe reader attached to the user interface computer to authenticate card-payments. In this case an invoice with a sum still to be paid and receipt will be sent to the customer after customer's final purchasable goods and amount owned is calculated.

### DESCRIPTION OF THE DRAWINGS AND THE SCHEMATICS

The accompanying drawings are included to provide a further understanding of the present disclosure, and are incorporated in and constitute a part of this specification. The drawings illustrate exemplary embodiments of the present disclosure and together with the description, serve to explain the principles of the present disclosure.

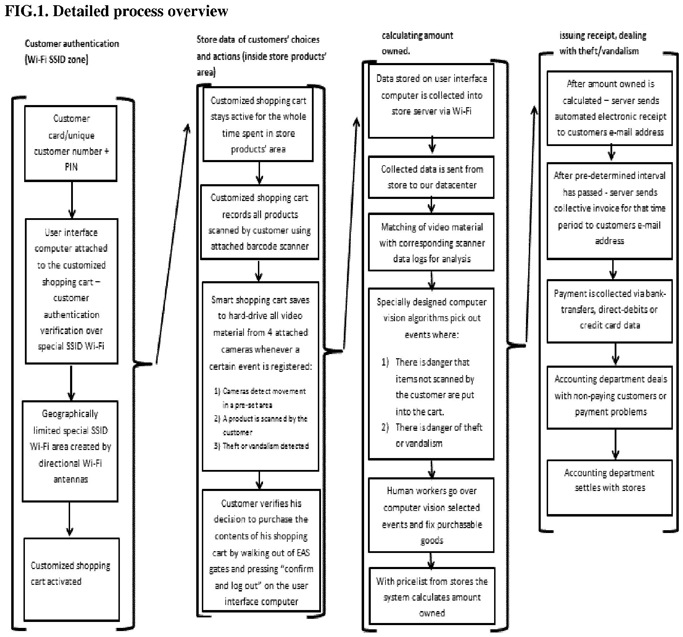

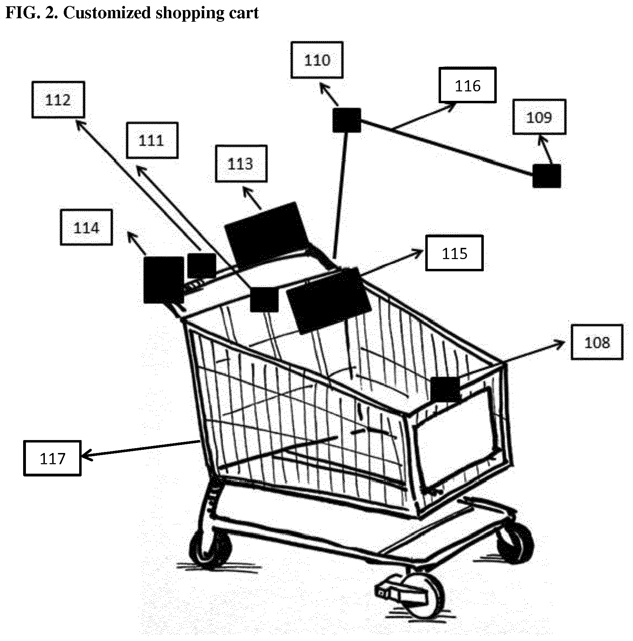

The aspects of the invention will be realized and attained by means of the elements and combinations particularly pointed out in the appended claims. It is to be understood that both the foregoing general description, the following detailed description and drawings are exemplary and explanatory only and are not restrictive of the invention, as claimed.
**FIG.1****.**
   Customer card/unique customer number and PIN - each customer that wants to use our service needs to make a contract and upon that the customer will be issued a personal customer card with a unique number and PIN. Customers' data will be held in a secure online database and when customer wants to authenticate himself the database will be used to authenticate the PIN and unique number.
   User interface computer attached to a shopping cart - customer authentication verification over unique SSID Wi-Fi - customer will scan the barcode on customer card or use another form of electronic data delivery from customer-card to user interface computer. User interface computer will ask the customer for PIN. User interface computer will allow the online authentication of the PIN and customer unique number in case the user interface computer detects the presence of a unique SSID Wi-Fi network. The authentication process only works over the said unique SSID Wi-Fi network.
   Geographically limited unique SSID Wi-Fi area created by directional Wi-Fi antennas/blue-tooth distance measurement solution - The special limited area is created by directional Wi-Fi antennas that make sure that the Wi-Fi area does not expand into the store products area to make sure the cart can only be activated before entering the store products area (FIG.2.)
   Customized shopping cart activated - Customized shopping cart is activated making cameras and omnidirectional barcode scanner active. Cameras will start recording when certain parameters are met.
   Customized shopping cart stays active for the whole time spent in store products area - for security purposes it is important the cart and its' cameras stay active for the whole duration that the customer spends in the stores' products area. This is why log-in and log-out function are only available outside the stores' products area and the cart cannot be shut down or activated inside the stores' products area.
   Customized shopping cart saves to hard-drive all products scanned by customer using attached omnidirectional barcode scanner - whenever customer wishes to purchase a product the customer needs to register the product by scanning it with an attached omnidirectional barcode scanner. The omnidirectional barcode scanner is connected to the user interface computer attached to the cart and the computer will save to its hard-drive all EAN scanning logs.
   Customized shopping cart saves to hard-drive all video material from 4 attached cameras whenever a certain event is registered:
   1)Cameras detect movement in a pre-set area above the shopping cart
   2)A product is scanned by the customer
   In order to save hard-drive space and make transferring data quicker - only important parts of the video feed are saved. To achieve that special software will be used that will record camera feeds whenever a product is scanned by the customer or movement is detected near the cart or something is moving into the cart.
   Customer verifies the decision to purchase the contents of their shopping cart by walking out of the store's products area and pressing "confirm and log out" on the user interface computer screen - When customer has decided he has finished all the products he wants he can walk outside the stores' products area (through EAS gates) and then customer needs to log-off from the cart indicating that he is done with shopping and is liable for all the to be fixed purchasable goods. If the customer does not log-off then other people could use their active cart.
   Data stored on user interface computers attached to customized shopping carts is collected into store server via Wi-Fi or cable connection - Data stored onto the customized shopping carts user interface computer will be sent to a server located in the store via Wi-Fi or Bluetooth connection.
   Collected data is sent from store to our datacentre - A dedicated FTP solution will be used to transfer all data from the store(s) servers to our datacentre using stores existing internet (TCP/IP) connection.
   Matching of video material with corresponding omnidirectional barcode scanner data logs for analysis - data will be sorted and organized into a database and stored for later usage. The data will be organized in a way that puts data about the product registration (from barcode scanner or user computer interface) together with video footage from all cameras. Specifically designed computer vision algorithms pick out events where:
   1)There is danger that items not scanned by the customer are put into the cart.
   2)There is danger of theft or vandalism
   Object detection and object tracking algorithms will be used on the data sent to our datacentre to determine whether the customer has been honest and followed the procedure of registering all products before putting them into the customized shopping cart. Object tracking algorithms follow the product from scanner to the inside of the customized shopping cart. Object detection algorithms compare the products images derived from registration event from the database to products images that crosses the edges of the customized shopping cart into the customized shopping cart. Algorithms give an alert when they determine that customer might have put some products into the cart without registering them or detect some other suspicious activity such as damaging the cart, trying to block cameras or steal products.
   Human workers go over computer vision selected events and fix purchasable goods - Human workers go over the results provided by computer vision algorithms, watch over unclear video footage and fix final shopping carts for customers.
   With pricelist from stores the system calculates amount owned - Once human workers have fixed customers shopping carts, pricelist from the corresponding store will be used to calculate customers amount owned.
   After amount owned is calculated - server sends automated electronic receipt to customers e-mail address - Database and computer system send customers' electronic receipts for their fixed purchases and other extra additional fees when human workers have fixed the final shopping carts and supervisors have given authorization.
   After pre-determined interval has passed - server sends collective invoice for that time period to customers e-mail address - We will send customers a summarized invoice at an agreed upon interval with the amount payable for all customers purchases during a certain time period.
   Payment is collected via bank-transfers, direct-debits or credit card data - customer gets to choose their preferred way of payment. Optionally the amount owned for customer's registered goods will be payable in the store via card payment using a smartcard reader and PCI security standard compatible pin pad or magnetic stripe reader attached to the user interface computer to authenticate card-payments. In this case an invoice with a sum still to be paid and receipt will be sent to the customer after customer's final purchasable goods and amount owned is calculated.
   Accounting department deals with non-paying customers or payment problems - problematic customers will be given to collection agencies.
   Accounting department settles with stores - we will forward the money from customers to the stores and issue the stores an invoice for our services.

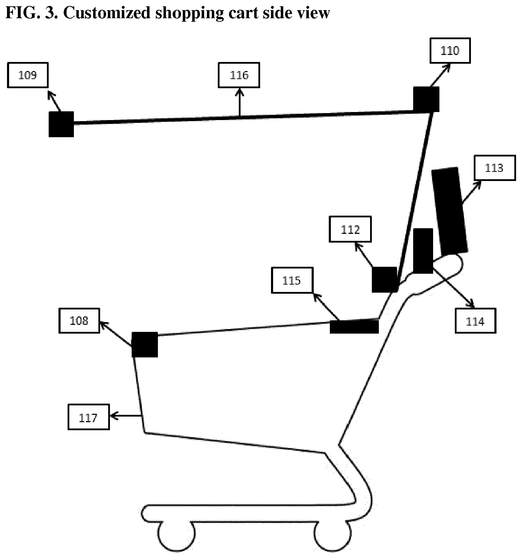

**FIG.2****. and** **FIG.3****.**
   Figures 2 and 3 illustrate a customized shopping cart fitted with special hardware and software. Special hardware is comprised of a shopping cart fitted with a fixed omnidirectional barcode scanner, user interface computer, battery, security tag remover and 4 fixated cameras. Special software is comprised of a login and authentication system, video recording system, barcode scanning system and customer user interface.
   The carts and its systems are designed in a way that allows to store them inside each other as regular shopping carts.
   1 **08 -** digital camera connected to and drawing power from the user interface computer (113).
   1 **09 -** digital camera connected to and drawing power from user interface computer (113).
   1 **10 -** digital camera connected to and drawing power from user interface computer (113).
   1 **11**- digital camera connected to and drawing power from user interface computer (113).
   1 **12 -** standalone EAS security tag remover.
   1 **13 -** user interface computer that records and saves data from cameras **(108,109,110,111),** digital scale **(115)** and omnidirectional barcode scanner **(114)**. The user interface computer has a touchscreen that allows the customer to interact with the unit and see the process of their shopping. The user interface computer stores programs that allow authenticating the customer via online authentication, instruct the customer via screen, show commercials via screen, share data with the store server and cloud authentication server via Wi-Fi interface. This unit also contains the battery to power all the other devices. The user interface computer will be placed inside a casing. The casing allows shielding the wires and makes sure that the connection between the periphery devices (cameras, omnidirectional barcode scanner and scale) will remain intact to the user interface computer. This unit might also comprise a smartcard reader, magnetic stripe reader and PCI security standard compatible pin pad to authenticate card-payments. "The casing is firmly connected to the handle bar of the cart.
   1 **14 -** Omnidirectional barcode scanner connected to and drawing power from the user interface computer. The barcode scanner is placed in a way that path from scanner to the inside of the cart will remain visible for as many cameras as possible to use the video footage with computer vision algorithms **(113)**.
   1 **15 -** Digital scale connected to and drawing power from the user interface.
   1 **16 -** Corbel holding cameras **(109)** and **(110)** in fixed positions. The corbel also houses the wiring for the camera units **(109)** and **(110)**.
   1 **17 -** Generic shopping cart with 4 wheels. As regular shopping carts - our carts will fit inside each other to conserve space at the store.
**FIG.4****.**
   Figure 3 illustrates the area inside the store where customer can log-in and log-out of the customized shopping cart. Log-in is necessary for the customer to activate the cart. Only activated carts are allowed into the store's product area. This unique SSID zone is created by Wi-Fi repeaters/routers with directional antennas **(100)**. The area itself will be located outside stores checkout systems and EAS gates **(101)**.
   1 **00 -** Wi-Fi repeater/router with directional antenna.
   1 **01 -** Wi-Fi area where carts can be activated and deactivated.
   1 **02 -** Stores products' area where all the merchandise is located. This area is located after the stores EAS system. If customers want to leave this area with merchandise then they have to go through the check-out area **(103)**.
   1 **03 -** check-out area. This is the area of the store where point-of-sale systems are located and where cashiers scan the goods and customers make the payments.
**FIG.5**.

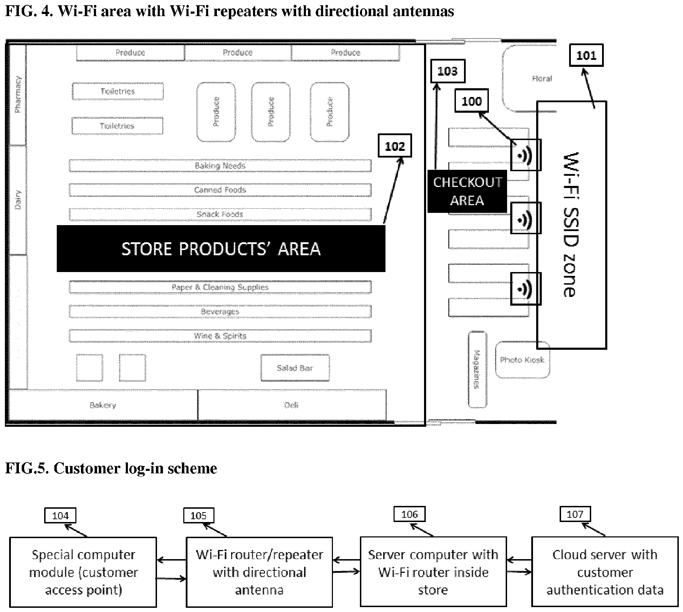

   Figure 4 illustrates the log-in/log-out system. To log-in customer has to use a personal customer card and enter their PIN code. Authentication will be done over internet verifying customer details against a cloud database. Access to the cloud database can only be achieved via the unique SSID connection and this special connection will only be available in the specific area.
   1 **04 -** User interface computer present on every cart in the system.
   1 **05 -** Special Wi-Fi router or repeater that only beams Wi-Fi in one direction making it possible to achieve a Wi-Fi area just outside the store's checkout area. All special routers or repeaters are linked to the store server **(106)** via traditional wiring.
   1 **06 -** Computer server inside the store that communicates with the cloud server and creates the original network that the repeaters **(105)** propagate through Wi-Fi.
   1 **07 -** Cloud server that contains customer data and other data necessary to authenticate the customer communication to the cloud server is achieved over an internet connection.

### DETAILED DESCRIPTION OF THE INVENTION

More specifically the invention is comprised of 27 steps and components.
1. Using a customized shopping cart (hereby "cart") and its user interface computer to register and authenticate the customer in a specific area outside the stores products area using customer-card and PIN. Special area for authentication (Wi-Fi SSID zone, FIG.3.) will be created by Wi-Fi routers with directional antennas. User interface computer will only accept authentication requests when it detects being in the specific pre-set area.
2. Once customer is authenticated through log-in process and the cart is in active mode, then the customer can take the cart and move to the store products area and start picking desired products.
3. This area based authentication method ensures that the customized shopping cart stays active for the whole time it spends in the stores' products area and that it cannot be shut down or deactivated while it is in the stores' products area.
4. Customized shopping cart saves to its local hard-drive all product EANs scanned by the customer using an attached omnidirectional barcode scanner.
5. Customized shopping cart saves to its hard-drive all video material from attached cameras whenever certain requirements are met:
   a. Cameras detect movement in pre-set areas around the customized shopping cart;
   b. A product is scanned by the customer;
   c. A product is registered by using user interface computer's touch screen menu
   d. A product is weighted on the digital scale.
6. 4 cameras on the shopping cart are arranged in a way to provide comprehensive vision about the area around the omnidirectional barcode scanner and the opening (the "mouth" of the cart/ the open space above the cart where you can insert items) of the cart so that even if some cameras are occluded all scanning incidents can be seen and the product can be tracked from the omnidirectional barcode scanner to the opening of the cart.
7. The shopping carts components (user interface computer, omnidirectional barcode scanner, digital scale and cameras) are battery powered. Each night after the store closes the carts are put to charging by store workers or our staff.
8. When customer leaves the stores products area he will use the user interface computer to log-off and by that action verify that he is liable to pay for all products scanned and put into the cart.
9. The cart can only be turned off once the customer has exited the stores products' area and re-entered the special area for authentication (FIG.3.outside stores check-out area).
10. Data from the user interface computers attached to the carts will be sent via Wi-Fi connection or cable connection or docking connection to a server in the store and sent from store server over TCP/IP connection to our datacentre.
11. In the datacentre the data will be organized by matching relevant video material with corresponding omnidirectional barcode scanner data logs, touch screen interface product registrations and weighing incidents for analysis.
12. Object detection and object tracking algorithms will be used on the data sent to our datacentre to determine whether the customer has followed the procedure of registering all products before putting them into the customized shopping cart.
13. Specifically designed computer vision algorithms analyse video footage using all 4 camera angles from time periods around omnidirectional barcode scanner usage to track scanned products movement from the omnidirectional barcode scanner to the inside of the shopping cart. If the product moves from the scanning area of the omnidirectional barcode scanner to the inside of the shopping cart then marks the event as correct.
14. Specifically designed computer vision algorithms analyse video footage using all 4 camera angles from time periods around omnidirectional barcode scanner usage to track scanned products movement from the scanning area of the omnidirectional barcode scanner to the inside of the shopping cart. If the product movement is lost or some other product is detected moving into the cart then marks the event as incorrect.
15. Specifically designed computer vision algorithms analyse video footage using all 4 camera angles from time periods around digital scale usage to track scanned products movement from the digital scale to the inside of the shopping cart. If the product moves from the weighing area of the digital scale to the inside of the shopping cart then marks the event as correct.
16. Specifically designed computer vision algorithms analyse video footage using all 4 camera angles from time periods around digital scale usage to track scanned products movement from the weighing area of the digital scale to the inside of the shopping cart. If the product movement is lost or some other product is detected moving into the cart then marks the event as incorrect.
17. Specifically designed computer vision algorithms analyse video footage using all 4 camera angles from time periods around touch screen interface product registration and compare registered products images from database to video footage images of the product that is put into the cart. If the registered items images from the database match the images of the product put into the cart from the video footage then the algorithms mark the event as correct.
18. Specifically designed computer vision algorithms analyse video footage using all 4 camera angles from time periods around touch screen interface product registration and compare registered products images from database to video footage images of the product that is put into the cart. If the registered items images from the database do not match the images of the product put into the cart from the video footage then the algorithms mark the event as incorrect.
19. Specifically designed computer vision algorithms analyse video footage using all 4 camera angles from time periods around digital scale product registration and compare registered products images from database to video footage images of the product that is put into the cart. If the registered items images from the database match the images of the product put into the cart from the video footage then the algorithms mark the event as correct.
20. Specifically designed computer vision algorithms analyse video footage using all 4 camera angles from time periods around digital scale product registration and compare registered products images from database to video footage images of the product that is put into the cart. If the registered items images from the database do not match the images of the product put into the cart from the video footage then the algorithms mark the event as incorrect.
21. Specifically designed computer vision algorithms analyse video footage using all 4 camera angles from time periods around omnidirectional barcode scanner product registration and compare registered products images from database to video footage images of the product that is put into the cart. If the registered items images from the database match the images of the product put into the cart from the video footage then the algorithms mark the event as correct.
22. Specifically designed computer vision algorithms analyse video footage using all 4 camera angles from time periods around omnidirectional barcode scanner product registration and compare registered products images from database to video footage images of the product that is put into the cart. If the registered items images from the database do not match the images of the product put into the cart from the video footage then the algorithms mark the event as incorrect.
23. Specifically designed computer vision algorithms also pick out events where:
   a. There is danger that items not registered by the customer are put into the cart;
   b. There is danger of theft or vandalism.
24. Human workers use manual inspection to go over pre-mentioned events that the computer vision algorithms registered as incorrect or events where there is danger of not registered items being put into the cart or where there is danger of theft or vandalism to determine whether the list of registered products match the contents of customers shopping cart or if there could be un-scanned products added to the shopping cart.
25. Human workers make final decisions, add missing products if necessary and fix customers' purchasable goods.
26. Once customers' purchasable goods are fixed in the database - stores relevant pricelists will be used to calculate amount owned from the customers.
27. After amount owned is calculated - server sends automated electronic receipt to customers e-mail address.
28. Payment is collected at regular intervals (dependent on store requirements might be once a month or more times a month) via bank-transfers, direct-debits or credit card data. Optionally the amount owned for customer's registered goods will be payable in the store via card payment using a smartcard reader and PCI security standard compatible pin pad or magnetic stripe reader attached to the user interface computer to authenticate card-payments. In this case an invoice with a sum still to be paid and receipt will be sent to the customer after customer's final purchasable goods and amount owned is calculated.

It is to be understood that the above description is intended to be illustrative and not restrictive. Many other embodiments will be apparent to those of skill in the art upon reading and understanding the above description. The scope of the invention should therefore be determined with reference to the appended claims, along with the full scope of equivalents to which such claims are entitled.

## Claims

1. A method providing retail store customers a check-out option by registering the desired products and placing them inside a customized shopping cart that records customers product registrations and video data - allowing for posterior fixing of customers purchasable goods and payment collection which comprises the steps of:
having customer preventively agree to pay for all fixed purchasable goods and extra fees inquired during customers visit to the store;
having customer identify and authenticate himself by activating a customized shopping cart in a specific area in the store before entering the store products area;
having customer register their desired products by either scanning the item with a barcode scanner or selecting desired product from a computer menu by which act indicating their decision of purchasing the product;
having customer place all registered items into a customized shopping cart;
capturing customer's actions and movements inside the store via digital cameras whenever a product is registered, vandalism is detected or movement in pre-set areas around the customized shopping cart is detected;
analysing collected video data with computer vision algorithms, taking into account digital scale, touch screen interface and omnidirectional barcode scanner data to automate the process of determining the contents of customers' shopping carts;
checking and verifying the contents of customers' shopping carts and if needed making changes to customers' final purchasable goods by manual inspection on omnidirectional barcode scanner, digital scale, touch screen interface and video data that has been analysed and filtered by computer vision algorithms;
calculating amount owned by the customer from customers' purchasable goods and relevant store's pricelist;
sending receipts and payment requests to customer electronically;
having customer pay the final missing sum for the purchases posteriorly via customers preferred payment method.

2. The method of claim1, wherein the specific area for cart activation or deactivation is achieved by creating a special Wi-Fi zone using directional Wi-Fi antennas or by determining the location of the customized shopping cart by detecting proximity or by location determination technologies.

3. The method of claim 1, wherein the customized shopping cart is kept activated for the whole duration that the customer spends in the store's products area.

4. The method of claim 1, wherein the registration of purchasable goods is done either by scanning the EAN code on the product with an omnidirectional barcode scanner connected to the cart, weighing the product on the scale and choosing the product from the touch screen interface menu on the user interface computer or choosing the product from the touch screen interface menu on the user interface computer.

5. The method of claim 1, wherein analysis results from specifically designed computer vision algorithms allow for posterior determination of the contents of customers shopping cart by analysing the videos made by digital-cameras on the cart and determining objects entered into the cart based on object tracking algorithms, object identification algorithms, object detection algorithms or other relevant techniques by comparing data from video images to data received from product scanning, product weighing or product registration via touch screen.

6. The method of claim 1, wherein payment for the goods taken from store is billed to the customer at a later stage either through monthly-invoice, direct-debit or other methods.

7. The method of claim 1, wherein the amount owned for customer's registered goods will be payable in the store and an updated invoice and receipt will be sent to the customer after customer's final purchasable goods and amount owned is calculated.

8. A system providing retail store customers a check-out option by registering the desired products and placing them inside a customized shopping cart that records customers product registrations and video data - allowing for posterior fixing of customers purchasable goods and payment collection comprising:
an apparatus and a system comprising Wi-Fi router/Wi-Fi repeater, directional Wi-Fi antennas, one or more processors; and a memory coupled to the one or more processors, the memory storing instructions that, when executed by the one or more processors, cause the one or more processors to perform operations that create a geographically specified log-in zone where customer authentication is possible;
an apparatus and a system comprising a shopping cart, multiple digital cameras, omnidirectional barcode scanner, digital weighing scale, security tag remover, battery and a user interface computer;
a computer program comprising instructions which, when the program is executed by a computer, cause the computer to carry out steps that allow customers to activate (log-in) or de-active (log-off) a customized shopping cart through user interface computer only in the specified log-in zone;
a computer program comprising instructions which, when the program is executed by a computer, cause the computer to carry out steps that cause an activated customized shopping cart to capture and record all customers product scanning's, weighing's, touches made on the user interface computers' touch screen and camera footage from cameras attached to the shopping cart;
a computer program comprising instructions which, when the program is executed by a computer, cause the computer to carry out steps that keep the customized shopping cart activated for the whole duration that the customer spends in the store's products area;
an apparatus and a computer program comprising instructions which, when the program is executed by a computer, cause the computer to carry out steps that collect saved data from user interface computers and transfer that said data to a remote computer where that data is saved and organized;
a computer program comprising instructions which, when the program is executed by a computer, cause the computer to carry out steps that organize and filter collected video material to create multiple-angle video footage views from events that are comprised of all product registration events, vandalism events and events that comprise of items entering the customized shopping cart;
a computer program comprising instructions which, when the program is executed by a computer, cause the computer to carry out steps that analyse video footages using multiple camera angles from events that are comprised of product registration, vandalism and items entering the cart with specifically designed computer vision algorithms to automate the process of determining the contents of customers' shopping carts;
a computer program comprising instructions which, when the program is executed by a computer, cause the computer to carry out steps that allow for manual inspection of video material, omnidirectional barcode scanner data, digital scale data and touch screen interface data to check and verify the contents of customers' shopping carts and if needed make changes to customers' final purchasable goods;
a computer program comprising instructions which, when the program is executed by a computer, cause the computer to carry out steps that calculate the amount owned by customer;
a computer program comprising instructions which, when the program is executed by a computer, cause the computer to carry out steps that send automated electronic receipts and invoices to customers.

9. The system of claim 2, wherein the customized shopping cart is fitted with a omnidirectional barcode scanner, all-purpose user interface computer with a touch screen, digital scale, security tag remover, additional battery and 1 or more digital cameras.

10. The system of claim 2, wherein the customer uses a customer-card and PIN code/password to activate (log-in) the customized shopping cart.

11. The system of claim 2, wherein the geographically specified log-in zone is created by Wi-Fi repeaters/routers/access-points with directional antennas creating a unique SSID that is available only inside the zone or distance determination techniques such as Bluetooth beacons.

12. The system of claim 2, wherein once activated (logged-in) shopping cart stays active for the whole time the customer spends in the shopping area and cannot be shut down.

13. The system of claim 2, wherein specifically designed computer vision algorithms are used to allow for posterior determination of the contents of customers shopping cart by analysing the videos made by digital-cameras on the cart and determining objects entered into the cart based on object tracking algorithms, object identification algorithms, object detection algorithms or other relevant techniques by analysing data from video images and data received from product scanning, product weighing or product registration via touch screen.

14. The system of claim 2, wherein the amount owned by customer is calculated from store's relevant pricelist and customers purchasable goods determined by pre-mentioned computer vision algorithms and manual inspection.

15. The system of claim 2, wherein the user interface computer also comprises a smartcard reader, magnetic stripe reader and PCI security standard compatible hardware to authenticate card-payments.
